# EUROPEAN PATENT APPLICATION

(11) **EP 1 250 020 A1**
(43) Date of publication of application: **16.10.2002**
(21) Application number: 01273195.6
(22) Date of filing: 27.12.2001
(51) Int. Cl.: H04Q 7/38, H04L 29/08

(54) **MOBILE COMMUNICATION SYSTEM AND RADIO COMMUNICATION METHOD**

(30) Priority: 05.01.2001 JP 2001000459
(71) Applicant: MATSUSHITA ELECTRIC INDUSTRIAL CO., LTD., Kadoma-shi, Osaka 571-8501 (JP)
(72) Inventor: FUKUI, Akito, Yokohama-shi, Kanagawa 232-0064 (JP)
(74) Representative: Grünecker, Kinkeldey, Stockmair & Schwanhäusser Anwaltssozietät
(86) International application number: JP0111520
(87) International publication number: WO02056631

(57) **Abstract**

A mobile communication system which can reduce the delay time required for retransmission between layer 2 processing sections by suppressing the missing of data and the missing of retransmission request frame used for retransmission request between layer 2 processing sections of a base station and a mobile station, and which accordingly prevents occurrence of timeout in TCP of an upper layer and can suppress decreasing of throughput. In the present system, the priority of data of a downlink radio channel directed to mobile station 105 is set in layer 2 processing 112 of base station 104, the modulation or transmission power control of the data is carried out according to the priority in layer 1 transmission section 113. The priority is set in a retransmission request frame (ACK/NACK frame) to be transmitted to base station 104 in layer 2 processing section 121 of mobile station 105, and the modulation or transmission power control of the ACK/NACK frame is carried out according to the priority in layer 2 processing section 121 of mobile station 105.

## Description

### Technical Field

The present invention relates to a mobile communication system and a radio communication method in which radio communication is carried out using a communication protocol, for instance, TCP (Transmission Control Protocol) commonly with a retransmission control of radio interface layer 2.

### Background Art

Japanese Patent Application No. 11-4236 discloses one kind of a conventional mobile communication system and radio communication method. Moreover, a radio interface layer in the present description is a specific layer (referred to also as "layer" simply in the description) when a radio communication system is regarded as a layer structure, which carries out a protocol processing predetermined for every layer.

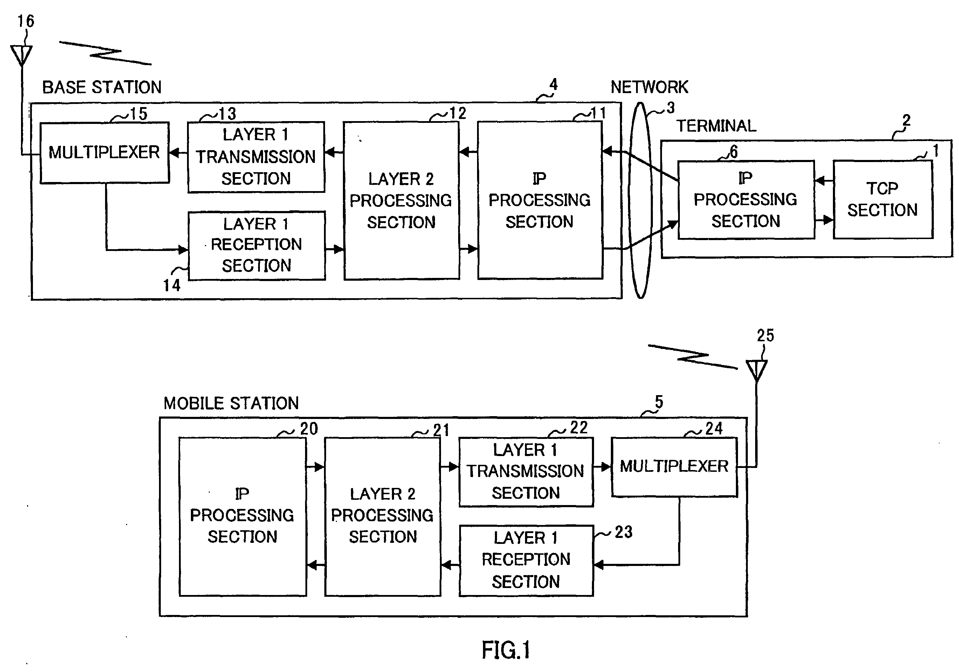

FIG. 1 is a block diagram showing a configuration of a conventional mobile communication system.

The mobile communication system shown in FIG. 1 comprises terminal 2, such as personal computer, etc., provided with TCP section 1 which carries out TCP protocol processing, network 3 which may be a telephone, dedicated channel or internet to which this terminal 2 is connected, base station 4 which is connected to network 3, and mobile station 5, such as a cellular telephone, which carries out radio communication with base station 4. In addition, terminal 2 comprises IP processing section 6 to carry out packet transmission and reception in accordance with an Internet protocol (IP).

Base station 4 is provided with IP processing section 11, layer 2 processing section 12, layer 1 transmission section 13, layer 1 reception section 14, multiplexer 15 and antenna 16.

IP processing section 11 is to carry out packet transmission and reception according to the internet protocol (IP). Layer 2 processing section 12 is to carry out processing for correcting data error in a radio period by retransmission control based on ARQ (Automatic Retransmission Request). Layer 1 transmission section 13 is to carry out transmission processing such as modulation and spreading required in CDMA (Code Division Multiple Access ) communications, transmission power control, etc. Layer 1 reception section 14 is to carry out reception processing such as despreading, demodulation, etc. Multiplexer 15 is to control transmission and reception of antenna 16.

Mobile station 5 is provided with TCP section 20, layer 2 processing 21, layer 1 transmission section 22, layer 1 reception section 23, multiplexer 24 and antenna 25.

TCP section 20 is to carry out the TCP protocol processing. Layer 2 processing section 21 is to carry out processing for correcting data error in a radio period by retransmission control based on ARQ. Layer 1 transmission section 22 is to carry out transmission processing such as modulation or spreading required in CDMA communications , transmission power control, etc. Layer 1 reception section 23 is to carry out reception processing such as despreading, demodulation, etc. Multiplexer 24 is to control transmission and reception of antenna 25.

Moreover, in third generation mobile communication, an RLC (Radio Link Control) protocol specified in 3GPP TS 25.322 is used as a protocol of layer 2 processing section 12.

An operation of a radio transmission system in which such a TCP and layer 2 retransmission control are used commonly to carry out communication will be explained below.

First, the operation at the time data is transmitted from terminal 2 to mobile station 5 will be described.

The data of terminal 2 is subjected first to TCP protocol in TCP section 1, thus, a serial number is given to detect missing data. TCP section 1 carries out communication with TCP section 20 of mobile station 5 via IP processing section 6, network 3 and base station 4, and error correction is performed between both TCP sections 1 and 20 by retransmission.

The data outputted from TCP section 1 is then subjected to retransmission protocol in order to correct an error in a radio period between base station 4 and mobile station 5 in layer 2 processing section 12 of base station 4, thus a serial number is given to detect missing data. The following is an explanation assuming RLC protocol is used.

The data outputted from layer 2 processing section 12 is transmitted to layer 1 transmission section 13, processing such as modulation and spreading that are necessary for performing communication by W-CDMA (Wideband Code Division Multiple Access), transmission power control, etc. are executed. The data is, then, transmitted to mobile station 5 through multiplexer 15 and antenna 16.

This transmitted data is received by antenna 25 of mobile station 5, and inputted into layer 1 reception section 23 through multiplexer 24. In layer 1 reception section, processing of W-CDMA such as demodulation, despreading, etc. are executed.

The data after these processing, is inputted into layer 2 processing section 21, and error detection is performed. That is to say, layer 2 processing section 21 carries out processing to detect missing data in a radio period from omission of a serial number given to the data in the opposed layer 2 processing section 12. If missing data is detected, therefore, the corresponding number is stored in a retransmission request frame (ACK/NACK frame), and this ACK/NACK frame is transmitted to layer 2 processing section 12 of the opposed base station 4. Here, ACK indicates reception is O.K. while NACK indicates reception is NG (No Good).

When layer 2 processing section 12 of base station 4 receives the ACK/NACK frame, the data of the corresponding number is transmitted to mobile station 5 again.

Both of layer 2 processing sections 12 and 21 correct the missing data in the radio period by repeating the operation until the missing data disappears.

The data subjected to processing in layer 2 processing section 21 of mobile station 5 is transmitted to TCP section 20. TCP section 20 identifies the received data from a serial number given to the data in the opposed TCP section 1, and transmits an ACK frame with the serial number of the received data to the opposed TCP section 1.

TCP section 1 of the opposed terminal 2 identifies the number of the data, which has not been received by mobile station 5 despite the data having been transmitted, from the serial number stored in the ACK frame, and the data having the corresponding number is transmitted again to mobile station 5.

Both of TCP sections 1 and 20 assure the end-to-end data communication reliability by repeating the operation until missing data disappears.

The data communication reliability can be guaranteed by carrying out the same operation also in the case that data is transmitted from mobile station 5 to terminal 2.

However, the quality of a radio channel is bad in such a conventional mobile communication system, so if transmission between both of layer 2 processing sections 12 and 21 is repeated many times, a time period in which data transmitted from TCP section 1 of terminal 2 reaches TCP 20 of mobile station 5 will increase, which results in increasing of a time period in which an ACK relating to a corresponding data reaches TCP section 1 of the terminal 2.

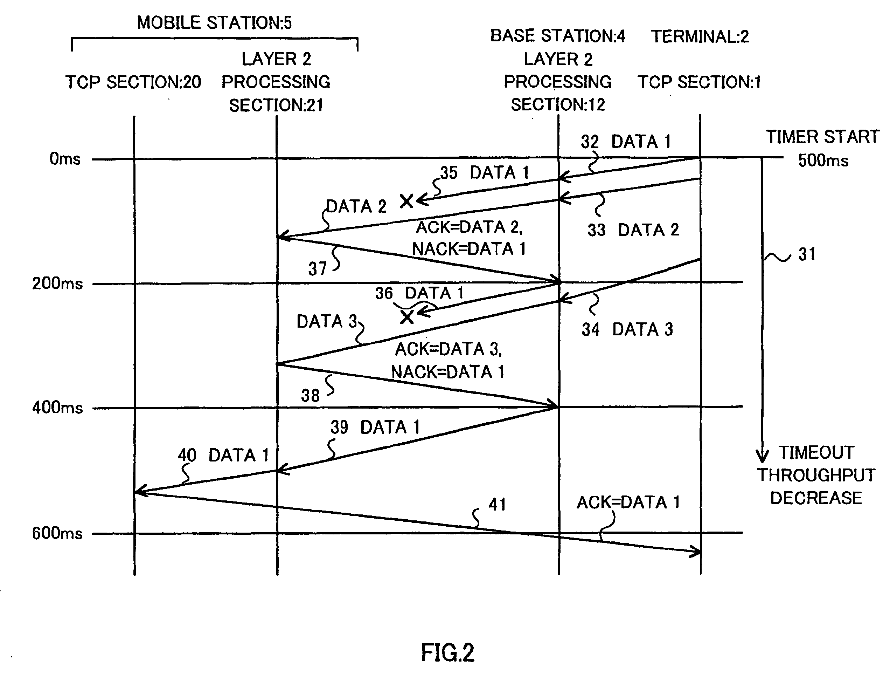

That is to say, as shown in the timing diagram of FIG. 2, TCP section 1 of terminal 2 has an ACK waiting timer for transmission confirmation, and as shown with arrow 31, the timer is started at data transmission and it is stopped at the time of arrival of an ACK of the corresponding data.

TCP section 1, if the ACK of the corresponding data does not arrive and the timeout occurs, regards network 3 as being crowded and lowers transmission throughput by reducing a transmission window.

For example, it is assumed that after data 1 through 3 are transmitted from TCP section 1 of terminal 2 as shown in FIG. 2 with reference numerals 32 through 34, data 1 does not reach layer 2 processing section 21 of mobile station 5 as shown with reference numerals 35 and 36, and retransmission between layer 2 processing section 12 of base station 4 and layer 2 processing section 21 of mobile station 5 is repeated as shown with reference numerals 37 through 39 ( in FIG. 2, three times).

In this case, there is a problem that although network 3 is not crowded, arrival of data 1 at TCP section 20 shown in reference numeral 40 is late, arrival of the ACK at TCP section 1 is consequently late shown with reference numeral 41, the timeout in TCP section 1 occurs, and the throughput is reduced.

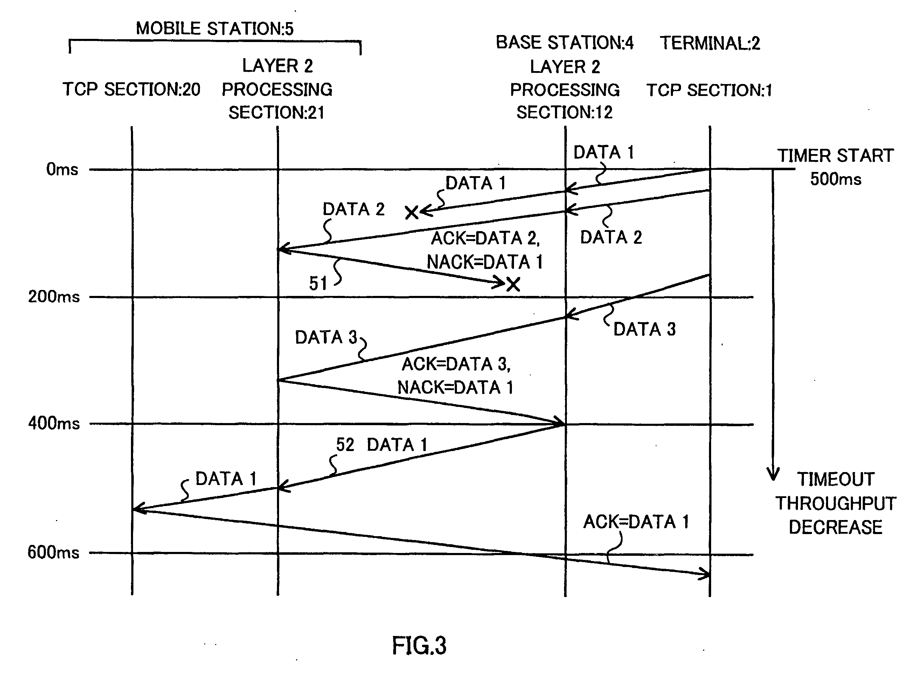

Moreover, in the case that an ACK/NACK frame transmitted from layer 2 processing section 21 of mobile station 5 is missing as shown in FIG. 3 with reference numeral 51, despite the number of retransmission being one time as shown with reference numeral 52, there is a problem that the transmission time of the data between both layer 2 processing sections 12 and 21 increases, the arrival of the ACK at TCP section 20 of mobile station 5 is late, thus, TCP section 1 of terminal 2 cause occurrence of the timeout, and the throughput is redueced.

### Disclosure of Invention

It is an object of the present invention to provide a mobile communication system and radio communication method that can reduce the delay time required for retransmission between layer 2 processing sections of a base station and a mobile station by suppressing the missing of data between the layer 2 processing sections and also the missing of a retransmission request frame used for retransmission, and that can accordingly prevent decreasing of throughput by suppressing occurrence of timeout in TCP of upper layer.

According to an aspect of the present invention, a base station apparatus uses priority information from an upper radio interface layer above radio interface layer 1 to execute radio interface layer 1 processing.

According to another aspect of the present invention, a base station apparatus uses priority information from an upper radio interface layer above radio interface layer 2 to execute radio interface layer 2 processing.

According to a still further aspect of the present invention, a base station apparatus comprises a radio interface layer 2 processing section which sets the priority degree of data in a downlink radio channel directed to a mobile station apparatus, and a radio interface layer 1 processing section which executes radio interface layer 1 processing on said data according to the priority degree set by said radio interface layer 2 processing section.

According to a still further aspect of the present invention, a mobile station apparatus uses priority information from an upper radio interface layer above radio interface layer 1 to execute radio interface layer 1 processing.

According to a still further aspect of the present invention, a mobile station apparatus uses priority information from an upper radio interface layer above radio interface layer 2 to execute radio interface layer 2 processing.

According to a still further aspect of the present invention, a mobile station apparatus comprises a radio interface layer 2 processing section which sets the priority degree of data in an uplink radio channel directed to a base station apparatus, and a radio interface layer 1 processing section which executes radio interface layer 1 processing on said data according to the priority degree set by said radio interface layer 2 processing section.

According to a still further aspect of the present invention, a mobile communication system comprises a base station apparatus and a mobile station apparatus, wherein said base station apparatus comprises a first radio interface layer 2 processing section which sets the priority degree of data in a downlink radio channel directed to said mobile station apparatus, and a first radio interface layer 1 processing section which performs radio interface layer 1 processing on the data in said downlink radio channel according to the priority degree set by said first radio interface layer 2 processing section, and said mobile station apparatus comprises a second radio interface layer 2 processing section which sets the priority degree of data in an uplink radio channel directed to said base station apparatus, and a second radio interface layer 1 processing section which performs radio interface layer 1 processing on the data in said uplink radio channel according to the priority degree set by said second radio interface layer 2 processing section.

According to a still further aspect of the present invention, a mobile communication method, which is a communication method in either a base station apparatus or mobile station apparatus, comprises a radio interface layer 2 processing step for setting the priority degree of data in a radio channel directed to an opposed apparatus, and a radio interface layer 1 processing step for executing radio interface layer 1 processing on said data according to the priority degree set in said radio interface layer 2 processing step.

### Brief Description of Drawings

FIG. 1 is a block diagram showing a configuration of a conventional mobile communication system;
FIG. 2 is a timing diagram to explain an operation of a conventional mobile communication system;
FIG. 3 is another timing diagram to explain an operation of a conventional mobile communication system;
FIG. 4 is a block diagram showing a configuration of a mobile communication system according to one embodiment of the present invention; and
FIG. 5 is a timing diagram to explain an operation of a mobile communication system according to the embodiment of the present invention.

### Best Mode for Carrying out the Invention

Hereinafter, an embodiment of the present invention will be specifically described with reference to the accompanying drawings . In addition, a radio interface layer is, as described above, a specific layer when a radio communication system is regarded as a layer structure (referred to also as "layer" simply in the description), and carries out a protocol processing predetermined for every layer.

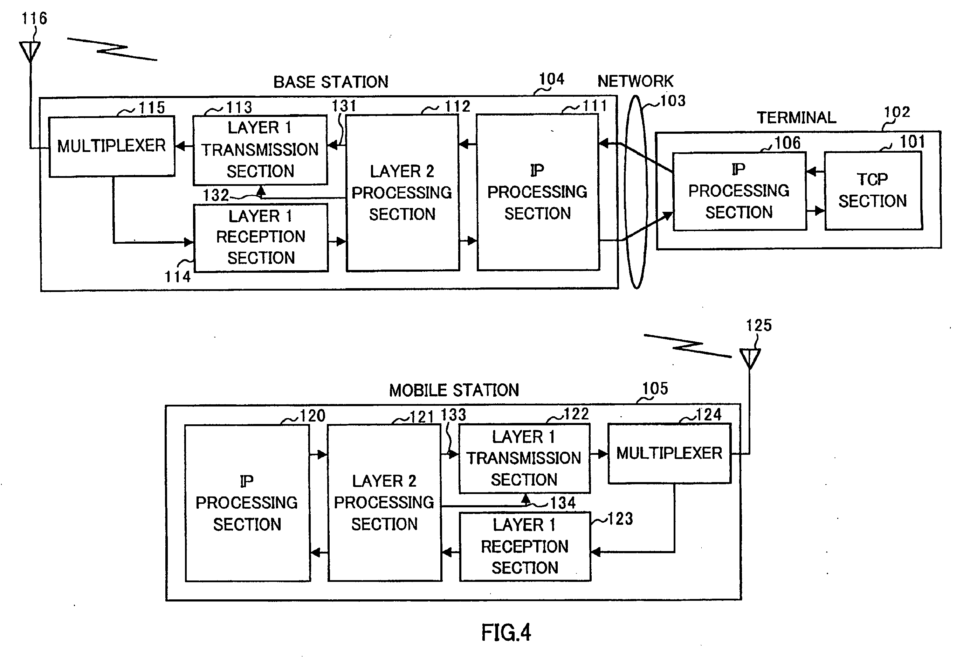

FIG. 4 is a block diagram showing a configuration of a mobile communication system according to one embodiment of the present invention.

The mobile communication system shown in FIG. 4 comprises terminal 102, such as a personal computer, etc., provided with TCP section 101 which carries out TCP protocol processing, network 103, such as telephone, dedicated channel or internet, to which terminal 102 is connected, base station 104 which is connected to network 103, mobile station 105, such as a cellular telephone, which carries out radio communication with base station 104. In addition, terminal 102 comprises IP processing section 106 which carries out packet transmission and reception in accordance with an Internet protocol (IP).

Base station 104 is provided with IP processing section 111, layer 2 processing section 112, layer 1 transmission section 113, layer 1 reception section 114, multiplexer 115 and antenna 116.

IP processing section 111 is to carry out packet transmission and reception according to the internet protocol (IP).

Layer 2 processing section 112 is to perform processing of correcting data error in a radio period by a retransmission control based on ARQ, and also is to output the number of times of retransmitting corresponding data 131 to layer 1 transmission section 113 as priority information 132 when data 131 is outputted to layer 1 transmission section 113.

Layer 1 transmission section 113 is to carry out transmission processing such as modulation and spreading required in CDMA, transmission power control, etc. based on priority information 132. Layer 1 reception section 114 is to carry out reception processing such as despreading; demodulation, etc. Multiplexer 115 is to control transmission and reception of antenna 116.

Mobile station 105 is provided with TCP section 120, layer 2 processing section 121, layer 1 transmission section 122, layer 1 reception section 123, multiplexer 124 and antenna 125.

TCP section 120 is to carry out the TCP protocol processing. Layer 2 processing section 121 is to perform processing of correcting data error in a radio period by a retransmission control based on ARQ, and also is to output the number of times of retransmitting corresponding data 133 to layer 1 transmission section 122 as priority information 134 when data 133 is outputted to layer 1 transmission section 122.

Layer 1 transmission section 122 is to carry out transmission processing such as modulation and spreading required in CDMA, transmission power control, etc. based on priority information 134. Layer 1 reception section 123 is to carry out reception processing such as despreading, demodulation, etc. Multiplexer 124 is to control transmission and reception of antenna 125.

An operation of a radio transmission system in which such TCP and layer 2 retransmission control are used commonly to carry out communication will be explained below.

First, an operation at the time data is transmitted from terminal 102 to mobile station 105 will be described.

The data of terminal 102 is subjected first to TCP protocol processing in TCP section 101, thus, a serial number is given to detect missing data. TCP section 101 carries out communication with TCP section 120 of mobile station 105 via IP processing section 106, network 103 and base station 104, and error correction is carried out between both TCP sections 101 and 120 by retransmission.

The data outputted from TCP section 101 is then subjected to retransmission protocol processing in order to correct an error within a radio period between base station 104 and mobile station 105 in layer 2 processing section 112 of base station 104, thus a serial number is given to detect missing data. In the following explanation, it is assumed that RLC protocol is used.

The data outputted from layer 2 processing section 112 is transmitted to layer 1 transmission section 113, and processing required for executing communication based on W-CDMA, such as modulation, spreading, transmission power control, etc., are performed. The data, after that, is transmitted to mobile station 105 through multiplexer 115 and antenna 116.

This transmitted data is received by antenna 125 of mobile station 105, and is inputted into layer 1 reception section 123 through multiplexer 124. In layer 1 reception section 123, processing of W-CDMA, such as demodulation, despreading, etc., are executed.

The data after these processing, is inputted into layer 2 processing section 121, and error detection is carried out. In addition, layer 2 processing section 121 carries out processing to detect missing data within a radio period from omission of the serial number given to the data in opposed layer 2 processing section 112. Accordingly, when missing data is detected, its corresponding number is stored in a retransmission request frame (ACK/NACK frame), and this ACK/NACK frame is transmitted to layer 2 processing section 112 of the partner base station 104.

When layer 2 processing section 112 of base station 104 receives this ACK/NACK frame, data 131 of the corresponding number is transmitted to mobile station 105 again. Next, an operation of such a retransmission will be specifically explained.

When layer 2 processing section 112 passes data 131 to layer 1 transmission section 113, the number of times of retransmission of corresponding data 131 is passed as priority information 132. Layer 1 transmission section 113 transmits data having a high priority, i.e. the number of times of retransmission is large, with an intensified modulation and transmission power. Here, the intensified modulation means, for example, conversion from 16-QPSK (Quadriphase Phase Shift Keying) to 8-QPSK in a multiple modulation case.

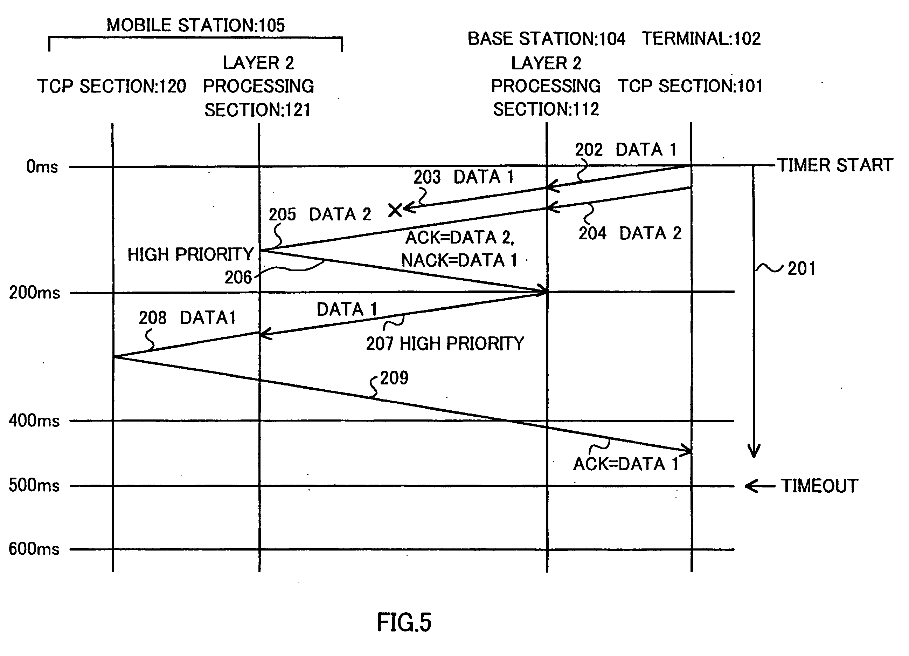

Such an operation will be explained with reference to a timing diagram shown in FIG. 5.

As shown in FIG. 5, TCP section 101 of terminal 102 has ACK waiting timer for transmission confirmation, and as shown with arrow 201, the timer is started at data transmission and it is stopped at ACK arrival of its corresponding data.

In FIG. 5, as an example, it is assumed that 500 ms is considered as an operational time of ACK waiting timer of TCP section 101 of terminal 102. In addition, it is assumed that each of layer 2 processing sections 112 and 121 request transmission of data 131 and 133 by passing priority information 132 and 134 to corresponding layer 1 transmission section 113 and 122, of which data is of high priority if the number of retransmission times exceeds two.

Although data 1 shown by reference numeral 202 outputted from TCP section 101 of terminal 102 is transmitted after executing a retransmission processing in layer 2 processing section 112 of base station 104, but it is assumed that it is missing because of an error on a radio channel as shown by reference numeral 203.

After that, data 2 shown by reference numeral 204 from TCP section 101 of terminal 102 is transmitted from base station 104, and as shown by reference numeral 205, it is assumed that it arrives at layer 2 processing section 121 of mobile station 105 without an error.

Layer 2 processing section 121 detects that data 1 is missing from absence of the serial number given to data 2, and, as shown by reference numeral 206, transmits a retransmission request of data 1 and a reception confirmation of data 2 held by an ACK/NACK frame to layer 2 processing section 112 of base station 104.

At that time, layer 2 processing section 121 of mobile station 105 sets the ACK/NACK frame to be of high priority, and requests transmission to layer 1 transmission section 122. Layer 1 transmission section 122 carries out transmission processing, e.g. increasing the transmission power of a high-priority ACK/NACK frame, so that an error might not occur in the ACK/NACK frame over the radio channel.

As a result, theACK/NACK frame shown by reference numeral 206 is transmitted to base station 104 without an error in one time transmission, and is passed to layer 2 processing section 112 of base station 104.

Layer 2 processing section 112 which received the ACK/NACK frame identifies that data 1 is missing. Since the next retransmission number of times of retransmission which is based on such an identification is the second time, the priority of data 1 is set high and the transmission to layer 1 transmission section 113 is requested.

However, in layer 2 processing section 112, a decision on the retransmission number of times and a threshold value may be carried out, and one-bit information indicating exceeding/not exceeding the threshold value is passed to layer 1 transmission section 113 in place of the priority information.

Layer 1 transmission section 113 carries out transmission processing, e.g. increasing the transmission power of data 1 of high priority, to mobile station 105 so that an error might not occur over the radio channel.

As a result, as shown by reference numeral 207, data 1 is transmitted to mobile station 105 without an error in the second time transmission, and as shown by reference numeral 208, it is then passed to TCP section 120 from layer 2 processing section 112.

Accordingly, TCP section 120 of mobile station 105 transmits reception confirmation ACK of data 1 immediately to terminal 102 as shown by reference numeral 209. Therefore, TCP section 101 of terminal 102 can receive ACK of data 1 before the ACK waiting timer entering a timeout state. Thus, TCP section 101 of terminal 102 can continue communication hereby without reducing the throughput.

According to the mobile communication system of the embodiment of the present invention, when the data is passed to layer 1 transmission section from layer 2 processing section, the retransmission number of times of the corresponding data is passed as the priority information, and the transmission is carried out in layer 1 transmission section after intensifying the modulation and transmission power of the data which has large retransmission number of times. Thus, it becomes possible to control the delay time required for retransmission between the layer 2 processing sections of the base station and mobile station since the error (missing) of data retransmitted between the base station and mobile station can be reduced, and the occurrence of timeout in higher-layer TCP can be suppressed, hence, suppressing the reduction of throughput.

Moreover, when the data is passed to the layer 1 transmission section from the layer 2 processing section, the ACK/NACK frame which indicates a retransmission request is passed with high priority, and the transmission is carried out in the layer 1 transmission section after intensifying the modulation and transmission power of the ACK/NACK frame.

Therefore, it becomes possible to control the missing (absence) of the ACK/NACK frame of the retransmission request between the layer 2 processing sections of the base station and mobile station since the error of the ACK/NACK frame between the base station and mobile station can be reduced, and it becomes possible to perform retransmission of the missing data immediately in the opposed layer 2 processing section. Because it is possible to reduce the delay time required for retransmission between the layer 2 processing sections, the occurrence of timeout in higher-layer TCP can be suppressed, hence, suppressing the reduction of throughput.

Moreover, although the example explained above makes the priority of an ACK/NACK frame high, it is also possible to make the priority of other control frames (window control frame, etc.) high.

In addition, in the aforementioned explanation, data is transmitted from base station 104 to mobile station 105, the ACK/NACK frame is transmitted from mobile station 105 to base station 104, and the retransmission is carried out, but a case in the inverse direction can also be realized similarly.

Further, in the aforementioned explanation, the case where the radio interface layer 2 processing section is built in base station 104 is explained, but it is not limited to this and it can be mounted in any other apparatus. Still further, in the aforementioned explanation, the case where the TCP section is mounted in terminal 102 is explained, but it is not limited to this and it can be mounted in any other apparatus such as the base station, etc., excluding terminal 102.

Furthermore, in the aforementioned explanation, the case where a priority is notified to the layer 1 transmission section from the radio interface layer 2 processing section is explained, but the priority can be notified to the radio interface layer 2 processing section from the IP processing section or TCP section that perform higher-layer processing rather than the radio interface layer 2 processing section, and the radio interface layer 2 processing section possibly carries out transmission order control or retransmission control according to the priority degree.

Furthermore, in the aforementioned explanation, the case where the priority is notified to the layer 1 transmission section from the radio interface layer 2 processing section is explained, but the priority can be notified to the radio interface layer 1 processing section from the IP processing section or TCP section that perform higher-layer processing rather than the radio interface layer 2 processing section, and the radio interface layer 1 processing section possibly carries out modulation processing or transmission power control according to the priority degree.

The present application is based on the Japanese Patent Application No. 2001-000459 filed on Jan. 5, 2001, entire content of which is expressly incorporated by reference herein.

### Industrial Applicability

The present invention is applicable to a mobile communication system and to a base station apparatus and mobile station apparatus in the mobile communication system.

## Claims

1. A base station apparatus which uses priority information from an upper radio interface layer above radio interface layer 1 to carry out radio interface layer 1 processing.

2. A base station apparatus which uses priority information from an upper radio interface layer above radio interface layer 2 to carry out radio interface layer 2 processing.

3. A base station apparatus comprising:
a radio interface layer 2 processing section which sets a priority of data in a downlink radio channel directed to a mobile station apparatus; and
a radio interface layer 1 processing section which performs radio interface layer 1 processing on said data according to the priority set by said radio interface layer 2 processing section.

4. The base station apparatus according to claim 3, wherein said radio interface layer 2 processing section sets a retransmission number of times as a priority.

5. The base station apparatus according to claim 3,
wherein said radio interface layer 2 processing section sets a priority for a retransmission request signal to be transmitted to said mobile station apparatus if missing data is detected in data received from said mobile station apparatus; and
wherein said radio interface layer 1 processing section performs radio interface layer 1 processing on said retransmission request signal according the priority set by said radio interface layer 2 processing section.

6. A mobile station apparatus which uses priority information from an upper radio interface layer above radio interface layer 1 to carry out radio interface layer 1 processing.

7. A mobile station apparatus which uses priority information from an upper radio interface layer above radio interface layer 2 to carry out radio interface layer 2 processing.

8. A mobile station apparatus comprising:
a radio interface layer 2 processing section which sets a priority of data in an uplink radio channel directed to a base station apparatus; and
a radio interface layer 1 processing section which performs radio interface layer 1 processing on said data according to the priority set by said radio interface layer 2 processing section.

9. The mobile station apparatus according to claim 8, wherein said radio interface layer 2 processing section sets a retransmission number of times as a priority.

10. The mobile station apparatus according to claim 8, wherein:
said radio interface layer 2 processing section sets a priority in a retransmission request signal to be transmitted to said base station apparatus if missing data is detected in data received from said base station apparatus; and
said radio interface layer 1 processing section performs radio interface layer 1 processing on said retransmission request signal according to the priority set by said radio interface layer 2 processing section.

11. A mobile communication system comprising base station apparatus and mobile station apparatus,
wherein said base station apparatus comprises a first radio interface layer 2 processing section which sets a priority of data in a downlink radio channel directed to said mobile station apparatus, and a first radio interface layer 1 processing section which performs radio interface layer 1 processing on the data in said downlink radio channel according to the priority set by said first radio interface layer 2 processing section, and
wherein said mobile station apparatus comprises a second radio interface layer 2 processing section which sets a priority of data in an uplink radio channel directed to said base station apparatus, and a second radio interface layer 1 processing section which performs radio interface layer 1 processing on the data in said uplink radio channel according to the priority set by said second radio interface layer 2 processing section.

12. The mobile communication system according to claim 11, wherein at least one of said first radio interface layer 2 processing section and said second radio interface layer 2 processing section sets a retransmission number of times as a priority.

13. The mobile communication system according to claim 11,
wherein said at least one of the first radio interface layer 2 processing section and the second radio interface layer 2 processing section sets a priority of a retransmission request signal to be transmitted to an opposed apparatus if missing data is detected in data received from said opposed apparatus, and
wherein a radio interface layer 1 processing section corresponding to said at least one of said first and second radio interface layer 2 processing section among said first radio interface layer 1 processing section and said second radio interface layer 1 processing section performs radio interface layer 1 processing on said retransmission request signal according to the priority set by the corresponding radio interface layer 2 processing section.

14. A radio communication method in either a base station apparatus or a mobile station apparatus comprising:
a radio interface layer 2 processing step of setting a priority of data in a radio channel directed to an opposed apparatus; and
a radio interface layer 1 processing step of performing radio interface layer 1 processing on said data according to the priority set in said radio interface layer 2 processing step.

15. The radio communication method according to claim 14, wherein said radio interface layer 2 processing step sets a retransmission number of times as a priority.

16. The radio communication method according to claim 14,
wherein said radio interface layer 2 processing step sets a priority in a retransmission request signal to be transmitted to the opposed apparatus if missing data is detected in data received from said opposed apparatus; and
wherein said radio interface layer 1 processing step performs radio interface layer 1 processing on said retransmission request signal according to the priority set in said radio interface layer 2 processing step.

## Amended claims

### Amended claims under Art. 19.1 PCT

1. (cancelled)

2. (cancelled)

3. A base station apparatus comprising:
a radio interface layer 2 processing section which sets a priority of data in a downlink radio channel directed to a mobile station apparatus; and
a radio interface layer 1 processing section which performs radio interface layer 1 processing on said data according to the priority set by said radio interface layer 2 processing section.

4. The base station apparatus according to claim 3, wherein said radio interface layer 2 processing section sets a retransmission number of times as a priority.

5. The base station apparatus according to claim 3,
wherein said radio interface layer 2 processing section sets a priority in a retransmission request signal to be transmitted to said mobile station apparatus if missing data is detected in data received from said mobile station apparatus; and
wherein said radio interface layer 1 processing section performs radio interface layer 1 processing on said retransmission request signal according to the priority set by said radio interface layer 2 processing section.

6. (cancelled)

7. (cancelled)

8. A mobile station apparatus comprising:
a radio interface layer 2 processing section which sets a priority of data in an uplink radio channel directed to a base station apparatus; and
a radio interface layer 1 processing section which performs radio interface layer 1 processing on said data according to the priority set by said radio interface layer 2 processing section.

9. The mobile station apparatus according to claim 8, wherein said radio interface layer 2 processing section sets a retransmission number of times as a priority.

10. The mobile station apparatus according to claim 8,
wherein said radio interface layer 2 processing section sets a priority in a retransmission request signal to be transmitted to said base station apparatus if missing data is detected in data received from said base station apparatus; and
wherein said radio interface layer 1 processing section performs radio interface layer 1 processing on said retransmission request signal according to the priority set by said radio interface layer 2 processing section.

11. A mobile communication system comprising base station apparatus and mobile station apparatus,
wherein said base station apparatus comprises a first radio interface layer 2 processing section which sets a priority of data in a downlink radio channel directed to said mobile station apparatus, and a first radio interface layer 1 processing section which performs radio interface layer 1 processing on the data in said downlink radio channel according to the priority set by said first radio interface layer 2 processing section, and
wherein said mobile station apparatus comprises a second radio interface layer 2 processing section which sets a priority of data in an uplink radio channel directed to said base station apparatus, and a second radio interface layer 1 processing section which performs radio interface layer 1 processing on the data in said uplink radio channel according to the priority set by said second radio interface layer 2 processing section.

12. The mobile communication system according to claim 11, wherein at least one of said first radio interface layer 2 processing section and said second radio interface layer 2 processing section sets a retransmission number of times as a priority.

13. The mobile communication system according to claim 11,
wherein said at least one of the first radio interface layer 2 processing section and the second radio interface layer 2 processing section sets a priority of a retransmission request signal to be transmitted to an opposed apparatus if missing data is detected in data received from said opposed apparatus, and
wherein a radio interface layer 1 processing section corresponding to said at least one of said first and second radio interface layer 2 processing section among said first radio interface layer 1 processing section and said second radio interface layer 1 processing section performs radio interface layer 1 processing on said retransmission request signal according to the priority set by the corresponding radio interface layer 2 processing section.

14. A radio communication method in either a base station apparatus or a mobile station apparatus comprising:
a radio interface layer 2 processing step of setting a priority of data in a radio channel directed to an opposed apparatus; and
a radio interface layer 1 processing step of performing radio interface layer 1 processing on said data according to the priority set in said radio interface layer 2 processing step.

15. The radio communication method according to claim 14, wherein said radio interface layer 2 processing step sets a retransmission number of times as a priority.

16. The radio communication method according to claim 14,
wherein said radio interface layer 2 processing step sets a priority in a retransmission request signal to be transmitted to the opposed apparatus if missing data is detected in data received from said opposed apparatus; and
wherein said radio interface layer 1 processing step performs radio interface layer 1 processing on said retransmission request signal according to the priority set in said radio interface layer 2 processing step.
